# EUROPÄISCHE PATENTANMELDUNG

(11) **EP 1 985 495 A2**
(43) Veröffentlichungstag der Anmeldung: **29.10.2008**
(21) Anmeldenummer: 08007305.9
(22) Anmeldetag: 14.04.2008
(51) Int. Cl.: B60Q 1/14, B60Q 1/30

(54) **Sicherheitsschaltung für wenigstens ein Leuchtmittel eines Fahrzeuges, vorzugsweise eines Kraftfahrzeuges**

(30) Priorität: 23.04.2007 DE 102007020319
(71) Anmelder: odelo GmbH, 71409 Schwaikheim (DE)
(72) Erfinder: Mack, Bernd, 73630 Remshalden (DE)
(74) Vertreter: Jackisch-Kohl, Anna-Katharina

(57) **Zusammenfassung**

Die Sicherheitsschaltung ist für ein Leuchtmittel eines Fahrzeuges vorgesehen und hat einen die Außenhelligkeit und/oder die Außentemperatur erfassenden Helligkeits- bzw. Temperatursensor (1,2). Bei Überschreiten eines vorgegebenen Helligkeitswertes bzw. Temperaturwertes erzeugt er ein Signal, das die Funktion einer Nebelschlussleuchteblockiert. Die Sicherheitsschaltung verhindert, dass die Nebelschlussleuchte eingeschaltet wird, wenn die Bedingungen für eine Nebelbildung nicht vorliegen.

## Beschreibung

Die Erfindung betrifft eine Sicherheitsschaltung für wenigstens ein Leuchtmittel eines Fahrzeuges, vorzugsweise eines Kraftfahrzeuges, nach dem Oberbegriff des Anspruches 1.

Bei Kraftfahrzeugen ist es bekannt, die Scheinwerfer in Abhängigkeit von der Außenhelligkeit selbsttätig ein- bzw. abzuschalten. Nebelschlussleuchten in Heckleuchten werden in der Regel vom Fahrer von Hand bei Bedarf eingeschaltet. In neueren Heckleuchten werden die die Nebelschlussleuchte aufnehmenden Kammern immer kleiner. Durch versehentliches Einschalten der Nebelschlussleuchte kann es zu einer Zerstörung dieser Leuchte kommen. Dies ist beispielsweise dann der Fall, wenn die Nebelschlussleuchte im Sommer bei hohen Außentemperaturen versehentlich eingeschaltet wird. Dann bestehen, insbesondere bei kleinen Nebelschlussleuchten-Kammern, Hitzeprobleme nicht nur durch die versehentlich eingeschaltete Nebelschlussleuchte, sondern auch durch die hohen Außentemperaturen.

Der Erfindung liegt die Aufgabe zugrunde, die gattungsgemäße Sicherheitsschaltung so auszubilden, dass ein versehentliches Einschalten der Nebelschlussleuchte auch bei ungünstigen Außenbedingungen nicht zu einer Zerstörung der Nebelschlussleuchte führt.

Diese Aufgabe wird bei der gattungsgemäßen Sicherheitsschaltung erfindungsgemäß mit den kennzeichnenden Merkmalen des Anspruches 1 gelöst.

Bei der erfindungsgemäßen Sicherheitsschaltung werden die Außenhelligkeit und/oder die Außentemperatur durch einen Sensor erfasst. Der Helligkeits- und/oder der Temperatursensor sind so ausgebildet, dass bei Überschreiten eines vorgegebenen Helligkeits- bzw. Temperaturwertes ein Signal erzeugt wird, das die Funktion der Nebelschlussleuchte blockiert. Sollte der Fahrer des Fahrzeuges versehentlich den Schalter zum Einschalten der Nebelschlussleuchte betätigen, verhindert die Sicherheitsschaltung in diesem Falle, dass die Nebelschlussleuchte eingeschaltet wird. Der Helligkeitswert und/oder der Temperaturwert werden so vorgegeben, dass bei den durch diese Werte gekennzeichneten Bedingungen eine Nebelbildung nicht auftreten kann. Liegen die Helligkeitswerte und/oder die Temperaturwerte unterhalb der vorgegebenen Größe, dann kann der Fahrer bei Bedarf die Nebelschlussleuchte in bekannter Weise einschalten, wenn es notwendig ist.

Vorteilhaft wird ein UND-Glied verwendet, an dessen Eingängen das jeweilige Sensorsignal und das Einschaltsignal für die Nebelschlussleuchte anliegen. Werden die vorgegebenen Werte für die Helligkeit und/oder die Temperatur überschritten, dann liegen an den Eingängen des UND-Gliedes gleiche Signale an, so dass die Funktion der Nebelschlussleuchte blockiert ist.

Vorteilhaft werden das Außenhelligkeitssignal und das Außentemperatursignal erfasst und den Eingängen eines ersten UND-Gliedes zugeführt. Durch die Beachtung zweier Kenngrößen, nämlich der Außenhelligkeit und der Außentemperatur, ergibt sich eine große Sicherheit bei der Aktivierung der Funktion der Nebelschlussleuchte. Bei entsprechend hohen Außentemperaturen und einer entsprechend hohen Außenhelligkeit tritt keine Nebelbildung auf.

Das Ausgangssignal des ersten UND-Gliedes wird vorteilhaft dem einen Eingang eines zweiten UND-Gliedes zugeführt. An dessen anderem Eingang liegt dann das Einschaltsignal für die Nebelschlussleuchte an. Sind beide Eingangssignale des zweiten UND-Gliedes gleich, wird die Funktion der Nebelschlussleuchte blockiert. Sind die an den Eingängen des zweiten UND-Gliedes anliegenden Signale unterschiedlich, dann kann der Fahrer des Fahrzeuges bei Bedarf die Nebelschlussleuchte einschalten. Ihre Funktion wird dann nicht blockiert.

Der Helligkeitssensor hat wenigstens ein Sensorelement, das vorzugsweise eine PIN-Diode ist.

Der Temperatursensor weist wenigstens einen temperaturabhängigen Widerstand auf, der vorzugsweise ein NTC- oder ein PTC-Widerstand ist.

Die Einstellung der vorgegebenen Werte für die Außenhelligkeit und/oder die Außentemperatur erfolgt durch in Serie geschaltete Widerstände.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung die Wirkungsweise der erfindungsgemäßen Sicherheitsschaltung,
- Fig. 2: in vereinfachter Darstellung ein Blockschaltbild der erfindungsgemäßen Sicherheitsschaltung,
- Fig. 3: ein Ausführungsbeispiel eines Temperatursensors der erfindungsgemäßen Sicherheitsschaltung,
- Fig. 4: ein Ausführungsbeispiel eines Helligkeitssensors der erfindungsgemäßen Sicherheitsschaltung.

Die Sicherheitsschaltung wird für Heckleuchten von Kraftfahrzeugen eingesetzt und hat die Aufgabe, ein versehentliches Einschalten einer Nebelschlussleuchte zu verhindern, wenn die Außenbedingungen den Auftritt von Nebel ausschließen. Dadurch wird verhindert, dass beispielsweise an einem heißen Sommertag die Nebelschlussleuchte versehentlich eingeschaltet wird. Sie würde zu einer thermischen Zerstörung der Nebelschlussleuchte führen, da außer der durch die Nebelschlussleuchte selbst erzeugten Wärme auch noch durch das auftreffende Sonnenlicht und hohe Außentemperaturen die Nebelschlussleuchte thermisch extrem beansprucht würde.

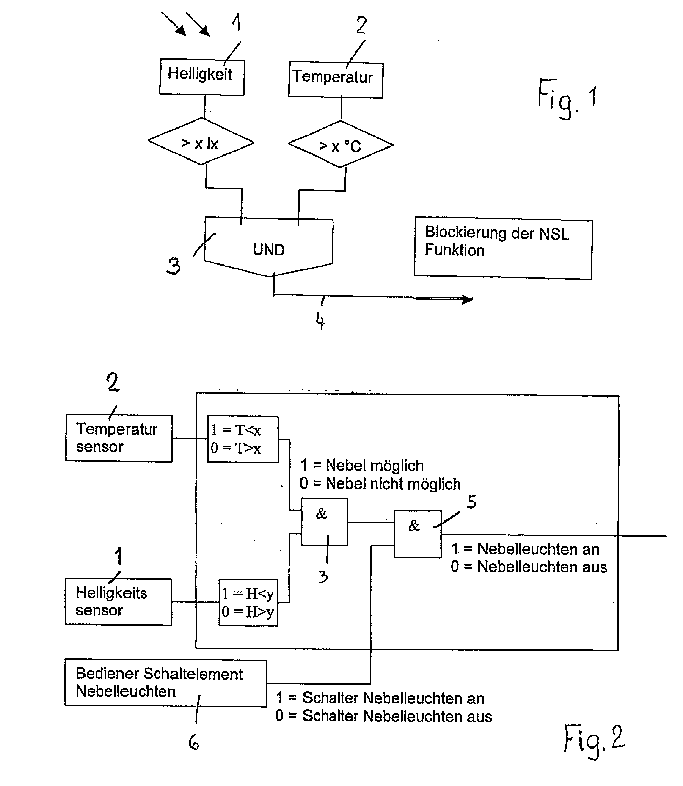

Die Sicherheitsschaltung erfasst, wie Fig. 1 schematisch zeigt, die Außenhelligkeit und die Außentemperatur. Die Helligkeit wird mit wenigstens einem Helligkeitssensor 1 und die Außentemperatur mit wenigstens einem Temperatursensor 2 erfasst. Die von den Sensoren 1, 2 erzeugten Signale werden einem UND-Glied 3 zugeführt, das dann ein Signal 4 zur Blockierung der Nebelschlussleuchten-Funktion erzeugt, wenn die Außenhelligkeit und die Außentemperatur einen vorgegebenen Wert überschreiten.

Anhand von Fig. 2 wird die Wirkungsweise dieser Schaltung näher erläutert. Der Helligkeitssensor 1 erfasst die Außenhelligkeit H. Solange die Außenhelligkeit H unterhalb eines vorgegebenen Wertes y liegt, erzeugt der Helligkeitssensor 1 das Highsignal 1. Überschreitet die Außenhelligkeit H diesen Wert y, dann erzeugt der Helligkeitssensor 1 das Lowsignal 0.

In gleicher Weise erzeugt der Temperatursensor 2 ein Highsignal 1, wenn die Außentemperatur T unterhalb eines Wertes x, und ein Lowsignal 0, wenn die Außentemperatur T oberhalb eines vorgegebenen Wertes x liegt. Dementsprechend werden dem UND-Glied 3 je nach Helligkeitswert und Temperaturwert die entsprechenden Signale 1 und 0 zugeführt. Ist der Außenhelligkeitswert H größer als der Wert y, dann wird dem UND-Glied 3 das Lowsignal 0 zugeführt. Entsprechend wird bei hohen Außentemperaturen T, die größer als der vorgegebene Wert x sind, dem UND-Glied das Lowsignal 0 zugeführt. In beiden Fällen ist eine Nebelbildung nicht möglich. Das UND-Glied 3 erzeugt somit ein Lowsignal 0, das einem weiteren UND-Glied 5 zugeführt wird. Wenn der Fahrer versehentlich bei diesen Bedingungen mittels eines Schalters 6 das Nebelschlusslicht einschaltet, dann erzeugt der Schalter 6 ein Highsignal 1, das dem UND-Glied zugeführt wird. Da in diesem Falle an den beiden Eingängen des UND-Gliedes 5 ein Low- und ein Highsignal anliegen, liegt am Ausgang des UND-Gliedes 5 ein Lowsignal 0 an, das ein Einschalten der Nebelschlussleuchte blockiert. Auf diese Weise wird zuverlässig verhindert, dass bei hohen Außentemperaturen und entsprechender Helligkeit die Nebelschlussleuchte versehentlich eingeschaltet wird und unter Umständen zu einer Zerstörung der Nebelschlussleuchte, gegebenenfalls sogar der gesamten Heckleuchte führen kann.

Solange die Helligkeit H und die Außentemperatur T unterhalb der kritischen Werte y und x liegen, werden dem UND-Glied 3 entsprechende Highsignale 1 zugeführt. Dies bedeutet, dass bei diesen Außenbedingungen eine Nebelbildung möglich ist. Da an beiden Eingängen des UND-Gliedes 3 jeweils ein Highsignal 1 anliegt, sendet das UND-Glied 3 ein Highsignal 1 an das nachfolgende UND-Glied 5. Wenn der Fahrer des Kraftfahrzeuges über den Schalter 6 die Nebelschlussleuchte einschaltet, erzeugt der Schalter 6 ebenfalls ein Highsignal 1. Da an beiden Eingängen des UND-Gliedes 5 jeweils ein Highsignal 1 anliegt, steht am Ausgang des UND-Gliedes 5 ein Highsignal 1 an, was bedeutet, dass die Nebelschlussleuchte eingeschaltet wird.

Liegt die Außentemperatur T oberhalb des kritischen Wertes x, dann wird ein Lowsignal 0 dem UND-Glied 3 zugeführt. Solange die Außenhelligkeit den kritischen Wert y noch nicht überschritten hat, sendet der Helligkeitssensor 1 weiterhin ein Highsignal 1. An den Eingängen des UND-Gliedes 3 liegen somit ein Highsignal 1 und ein Lowsignal 0 an, so dass über den Ausgang des UND-Gliedes 3 dem einen Eingang des UND-Gliedes 5 ein Lowsignal 0 zugeführt wird. Sollte der Fahrer den Schalter 6 versehentlich einschalten, steht am anderen Eingang des UND-Gliedes 5 ein Highsignal 1 an. Dadurch liegt am Ausgang des UND-Gliedes 5 das Lowsignal 0 an, wodurch ein Einschalten der Nebelschlussleuchte nicht möglich ist. Sobald die Außenhelligkeit H den kritischen Wert y überschreitet, sendet der Helligkeitssensor 1 ein Lowsignal 0 an das UND-Glied 3. Da nunmehr an den beiden Eingängen des UND-Gliedes 3 jeweils ein Lowsignal 0 anliegt, sendet das UND-Glied 3 ein Lowsignal 0 an das UND-Glied 5. Schaltet der Fahrer mit dem Schalter 6 bei diesen Außenbedingungen die Nebelschlussleuchte 6 ein, dann liegt am anderen Eingang des UND-Gliedes 5 ein Highsignal 1 an. Dies hat zur Folge, dass am Ausgang des UND-Gliedes 5 ein Lowsignal 0 anliegt, so dass die Nebelschlussleuchte trotz betätigtem Schalter 6 ausgeschaltet bleibt. Auf diese Weise wird eine Fehlbedienung durch den Fahrer korrigiert, so dass bei den genannten Außenbedingungen die Nebelschlussleuchte nicht eingeschaltet werden kann.

Liegt umgekehrt die Außentemperatur T unterhalb des kritischen Wertes x, dann liegt am einen Eingang des UND-Gliedes 3 ein Highsignal 1 an. Solange die Außenhelligkeit den kritischen Wert y noch überschreitet, liegt am anderen Eingang des UND-Gliedes 3 ein Lowsignal 0 an. Das dementsprechend am Ausgang des UND-Gliedes 3 anstehende Lowsignal 0, liegt am einen Eingang des UND-Gliedes 5 an. Sollte der Fahrer den Schalter 6 betätigen, dann steht am anderen Eingang des UND-Gliedes 5 das Highsignal 1 an. Dies hat zur Folge, dass am Ausgang des UND-Gliedes 5 ein Lowsignal 0 ansteht, das das Einschalten der Nebelschlussleuchte verhindert. Somit wird auch bei geringeren Außentemperaturen, aber großen Helligkeitswerten die Funktion der Nebelschlussleuchte blockiert, falls der Fahrer versehentlich den Schalter 6 betätigen sollte. Aufgrund des hohen Helligkeitswertes y ist davon auszugehen, dass Nebel nicht vorhanden ist.

Die Schwellwerte x und y für die Außentemperatur und die Außenhelligkeit werden so eingestellt, dass bei diesen Bedingungen eine Nebelbildung ausgeschlossen ist. Somit wird durch die Sicherheitsschaltung die Nebelschlusslichtfunktion bei den genannten Außenbedingungen blockiert.

In Kraftfahrzeugen sind häufig Helligkeits- und Temperatursensoren vorgesehen, die für die Sicherheitsschaltung eingesetzt werden können. So sind Helligkeitssensoren beispielsweise in Kraftfahrzeugen vorgesehen, um Scheinwerfer in Abhängigkeit von der Außenhelligkeit automatisch ein- und abzuschalten. Temperatursensoren werden beispielsweise im Rahmen der Klimaanlage des Kraftfahrzeuges eingesetzt. Diese Helligkeits- und Temperatursensoren senden ihre Signale auf einen im Fahrzeug vorhandenen Bus, vorzugsweise einen CAN-Bus. Aus diesen Signalen auf dem Bus kann beispielsweise innerhalb eines Hecksteuergerätes eine Auswertung erfolgen. Es ist auch möglich, die Auswerteeinheit innerhalb der Heckleuchte anzuordnen.

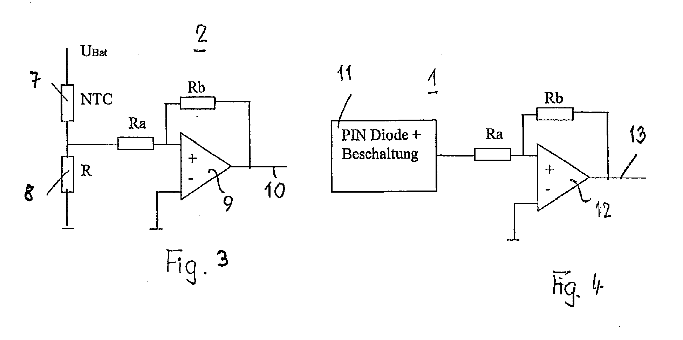

Für die Sicherheitsschaltung kann auch eine Standalone-Lösung eingesetzt werden, die vorteilhaft innerhalb der Leuchte untergebracht ist. In diesem Fall wird beispielhaft ein Temperatursensor entsprechend Fig. 3 und ein Helligkeitssensor entsprechend Fig. 4 eingesetzt. Der Temperatursensor 2 gemäß Fig. 3 hat einen temperaturabhängigen Widerstand 7, der in Reihe zu einem Widerstand 8 liegt. Die Batteriespannung U_{Bat} liegt über einen Widerstand Ra an einem Plus-Eingang eines Vergleichers 9 an. Der Minus-Eingang des Vergleichers 9 liegt an Masse. In Reihe zum Widerstand Ra liegt ein Widerstand Rb, der den Spannungsabfall vor und hinter dem Vergleicher 9 erfasst. Durch die beiden Widerstände Ra und Rb wird der Schwellwert x für die Außentemperatur eingestellt. Dieser Schwellwert kann fest eingestellt, aber auch einstellbar sein, insbesondere im Servicefall.

Der temperaturabhängige Widerstand 7 kann ein Heißleiter (NTC-Widerstand) sein, der sich dadurch auszeichnet, dass er einen negativen Temperaturbeiwert hat. Dadurch nimmt sein Widerstandswert mit zunehmender Temperatur ab. Als temperaturabhängiger Widerstand kann aber auch ein Kaltleiter (PTC-Widerstand) eingesetzt werden. Er hat einen positiven Temperaturbeiwert. Der Widerstand des Kaltleiters nimmt bei ansteigender Temperatur zunächst ab, bis bei einer Ausgangstemperatur der geringste Widerstand erreicht wird. Bei weiterer Erwärmung nimmt dann der Widerstandswert sprungartig zu. Das Ausgangssignal 10 wird zur Auswertung des Temperatursignales verwertet. Anstelle des Vergleichers 9 kann beispielsweise auch ein Mikroprozessor eingesetzt werden.

Der Helligkeitssensor 1 gemäß Fig. 4 hat ein lichtempfindliches Sensorelement 11, das vorteilhaft eine PIN-Diode mit einer entsprechenden Beschaltung ist. Das Sensorelement 11 ist eine Fotodiode, die einen kathodischen und einen anodischen Anschluss hat. Der anodische Anschluss kann einen niedrigen Durchgangswiderstand bei positiv vorgespannter Anode oder einen hohen Sperrwiderstand bei negativ vorgespannter Anode aufweisen. Die auf das Sensorelement auftreffende Strahlungsenergie wird in einen Strom umgewandelt, der über einen Widerstand Ra einem Plus-Anschluss eines Vergleichers 12 zugeführt wird. Der Minus-Anschluss des Vergleichers 12 liegt auf Masse. In Reihe zum Widerstand Ra liegt ein Widerstand Rb, der den Spannungsabfall über den Vergleicher 12 erfasst. Wie beim Temperatursensor 2 wird mit den beiden Widerständen Ra, Rb der Schwellwert y für die Helligkeit H eingestellt. Dieser Schwellwert kann auch einstellbar sein.

Anstelle des Vergleichers 12 als Auswerteeinheit kann beispielsweise auch ein Mikroprozessor verwendet werden, vorzugsweise derselbe Mikroprozessor, der auch für den Temperatursensor 2 eingesetzt wird. Das Ausgangssignal 13 des Vergleichers 12 wird einer Auswerteeinheit zugeführt, die in der beschriebenen Weise die Werte H für die Außenhelligkeit und die Außentemperatur T verarbeitet.

Durch die Verwendung des Helligkeitssensors 1 und des Temperatursensors 2 wird ein optimaler Schutz vor versehentlichem Einschalten der Nebelschlussleuchte gewährleistet, da sowohl die Außentemperatur als auch die Außenhelligkeit erfasst werden. Bei einer einfacheren Ausbildung der Sicherheitsschaltung wird nur die Außentemperatur und/oder nur die Außenhelligkeit erfasst. Überschreitet die Außenhelligkeit H den kritischen Wert y, dann kann davon ausgegangen werden, dass eine Nebelbildung nicht vorhanden ist. In diesem Falle wird die Funktion der Nebelschlussleuchte blockiert, wenn der Fahrer versehentlich über den Schalter 6 die Nebelschlussleuchte einschalten sollte.

Überschreitet andererseits die Außentemperatur T den vorgegebenen Wert x, dann kann wiederum davon ausgegangen werden, dass bei solchen hohen Außentemperaturen eine Nebelbildung nicht vorhanden ist. Dann wird ebenfalls die Funktion der Nebelschlussleuchte abgeschaltet, so dass sie auch bei einem versehentlichen Betätigen des Schalters 6 nicht eingeschaltet wird. In diesen Fällen ist nur das eine UND-Glied 3 notwendig. An seinem einen Eingang liegt dann das entsprechende Low- oder Highsignal des jeweils eingesetztes Sensors und an dessen anderem Eingang das Low- oder Highsignal des Schalters 6 an. Liegt der Außentemperatur- oder der Außenhelligkeitswert oberhalb des kritischen Wertes x bzw. y, steht am einen Eingang des UND-Gliedes 3 das Lowsignal 0 an. Wird versehentlich der Schalter 6 betätigt, dann steht am anderen Eingang des UND-Gliedes 3 das Highsignal 1 an mit der Folge, dass am Ausgang des UND-Gliedes 3 das Lowsignal 0 anliegt. Dadurch wird ein Einschalten der Nebelschlussleuchte trotz betätigtem Schalter 6 verhindert. Die Nebelschlussleuchte kann erst dann eingeschaltet werden, wenn der kritische Wert x bzw. y unterschritten ist. Dann liegt am einen Eingang des UND-Gliedes 3 das Highsignal 1 an. Wird der Schalter 6 eingeschaltet, liegt auch am anderen Eingang des UND-Gliedes 3 das Highsignal 1 an, so dass am Ausgang des UND-Gliedes 3 das Highsignal 1 ansteht. Die Nebelschlussleuchte wird dadurch eingeschaltet.

Die beschriebenen Ausführungsformen zeichnen sich einerseits durch ihre Zuverlässigkeit und andererseits durch ihre einfache und damit kostengünstige Gestaltung aus. Die Sicherheitsschaltung kann ohne Probleme auch in bestehende Fahrzeuge eingebaut werden. Der Einsatz der Sicherheitsschaltung verlängert die Lebensdauer der Nebelschlussleuchte und damit auch der gesamten Heckleuchte erheblich.

## Patentansprüche

1. Sicherheitsschaltung für wenigstens ein Leuchtmittel eines Fahrzeuges, vorzugsweise eines Kraftfahrzeuges, mit mindestens einem Sensor,
**dadurch gekennzeichnet, dass** als Sensor (1, 2) ein die Außenhelligkeit (H) und/oder die Außentemperatur (T) erfassender Helligkeitssensor (1) bzw. Temperatursensor (2) verwendet wird, der bei Überschreiten eines vorgegebenen Helligkeitswertes (y) bzw. Temperaturwertes (x) ein Signal erzeugt, das die Funktion einer Nebelschlussleuchte blockiert.

2. Schaltung nach Anspruch 1,
**dadurch gekennzeichnet, dass** die Sicherheitsschaltung wenigstens ein UND-Glied (3, 5) aufweist, an dessen Eingängen das Sensorsignal und ein Einschaltsignal für die Nebelschlussleuchte anliegen.

3. Schaltung nach Anspruch 1 oder 2,
**dadurch gekennzeichnet, dass** das Außenhelligkeitssignal und das Außentemperatursignal an den Eingängen eines ersten UND-Gliedes (3) anliegen.

4. Schaltung nach Anspruch 3,
**dadurch gekennzeichnet, dass** das Ausgangssignal des ersten UND-Gliedes (3) an dem einen Eingang eines zweiten UND-Gliedes (5) anliegt.

5. Schaltung nach Anspruch 4,
**dadurch gekennzeichnet, dass** am anderen Eingang des zweiten UND-Gliedes (5) das Einschaltsignal für die Nebelschlussleuchte anliegt.

6. Schaltung nach einem der Ansprüche 1 bis 5,
**dadurch gekennzeichnet, dass** der Helligkeitssensor (1) wenigstens ein Sensorelement (11) aufweist, das vorzugsweise eine PIN-Diode ist.

7. Schaltung nach einem der Ansprüche 1 bis 6,
**dadurch gekennzeichnet, dass** der Temperatursensor (2) wenigstens einen temperaturabhängigen Widerstand (7) aufweist, der vorzugsweise ein NTC- oder PTC-Widerstand ist.

8. Schaltung nach einem der Ansprüche 1 bis 7,
**dadurch gekennzeichnet, dass** der Helligkeitssensor (1) bzw. der Temperatursensor (2) zur Einstellung des vorgegebenen Helligkeitswertes (y) bzw. Temperaturwertes (x) in Serie geschaltete Widerstände (Ra, Rb) aufweist.
